# EUROPEAN PATENT APPLICATION

(11) **EP 4 389 788 A1**
(43) Date of publication of application: **26.06.2024**
(21) Application number: 22215334.8
(22) Date of filing: 21.12.2022
(51) Int. Cl.: C08F 220/18, C08L 33/04

(54) **CURABLE PRECURSOR OF A COMPOSITION**

(71) Applicant: 3M Innovative Properties Company, St. Paul, MN 55133-3427 (US)
(72) Inventor: Shaaban, Ahmad, 41453 Neuss (DE); Sprott, Sascha, 41453 Neuss (DE); Jung, Adrian Thomas, 41453 Neuss (DE); Fritz, Emelie, 41453 Neuss (DE)
(74) Representative: Mathys & Squire

(57) **Abstract**

The present disclosure relates to a curable precursor of a composition, the curable precursor comprising
(a) a radically (co)polymerizable (meth)acrylate-based component;
(b) a curing agent;
(c) an inorganic filler having a mean particle size (d₅₀) of at least 1 µm; and
(d) a thixotropic agent which is a carbamate.

The present disclosure further relates to the use of said curable precursor
for thermal management applications in the automotive and electronic industry;
as an electrically insulating composition in the electronic industry and for cable insulation; and
as a color pigment comprising composition in the coating and paint industry.

## Description

### Technical Field

The present disclosure relates to a curable precursor of a composition comprising a radically (co)polymerizable (meth)acrylate-based component, a curing agent, an inorganic filler having a mean particle size of at least 1 µm, and a thixotropic agent which is a carbamate.

### Background

Curable compositions have been known for years as suitable for use in a variety of applications that include general-use industrial applications such as adhesives and coatings, as well as high-performance applications in the electronics industry such as, e.g., for sealing and bonding electronic components. With broadened use of curable compositions over the years, performance requirements have become more and more demanding with respect to, in particular, curing profile, adhesion performance, storage stability, handleability and processability characteristics, and compliance with environment and health requirements. When curable compositions are additionally required to provide thermal conductivity or thermal insulation, the formulation of suitable compositions becomes even more challenging.

(Meth)acrylate structural adhesives are known to show outstanding mechanical properties and excellent overall bonding behavior. Examples of curable compositions provided with thermal conductivity are described in, e.g., US 2007/0142528 A1 and EP 3 736 300 A1. For improving thermal conductivity of curable compositions, thermally conductive fillers such as alumina or aluminum trihydroxide are used. For improving thermal insulation of curable compositions, thermally insulative fillers such as hollow glass microspheres may be used. When thermally conductive or thermally insulative fillers are used in curable compositions, a major drawback of these fillers is that they have a tendency to sediment or separate in the compositions, i.e., to demix or segregate, which is undesired as it negatively affects the overall performance of the curable compositions. Furthermore, wellbalanced formulations are needed having good mechanical properties, a good storage stability of their curable precursors, the so-called shelf life, and a good aging performance.

For curable compositions for potting applications such as potting compounds for sealing or potting adhesives for bonding, low viscosity formulations are required. Usually, a thixotropic agent is added to the formulation to avoid sedimentation and separation, i.e., demixing or segregation of the fillers. However, this will prevent the curable compositions from flowing and from being usable as potting adhesives or potting compound for sealing.

There is still a need for a curable precursor of an acrylic composition being usable as potting compounds comprising inorganic fillers and having an improved flowability, i.e., a low viscosity, and an acceptable process time, and having a good storage stability and good aging performance, and good mechanical properties of the cured composition.

As used herein, "a", "an", "the", "at least one" and "one or more" are used interchangeably. The term "comprise" shall include also the terms "consist essentially of" and "consists of".

### Summary

In a first aspect, the present disclosure relates to a curable precursor of a composition, the curable precursor comprising
(a) a radically (co)polymerizable (meth)acrylate-based component;
(b) a curing agent;
(c) an inorganic filler having a mean particle size (d₅₀) of at least 1 µm; and
(d) a thixotropic agent which is a carbamate.

In another aspect, the present disclosure also relates to the use of the curable precursor as disclosed herein
for thermal management applications in the automotive and electronic industry;
as an electrically insulating composition in the electronic industry and for cable insulation; and
as a color pigment comprising composition in the coating and paint industry.

Surprisingly, it has been found that thixotropic additives can be used which allow a thixotropic behavior for avoiding segregation or separation of the inorganic fillers during storage, and which allow, after shearing, a low viscous composition with acceptable process time for potting of the potting compounds comprising inorganic fillers.

The curable precursor disclosed herein has a good storage stability regarding separation and sedimentation of the inorganic fillers. Despite the curable precursor disclosed herein is stabilized for storage, a low viscosity after mixing/shearing and a fast curing is still possible.

The performance of the cured product, i.e., properties such as hardness, overlap shear strength, elongation at break, and, depending on the application, thermal conductivity or thermal insulation, is not adversely affected.

### Detailed Description

Disclosed herein is a curable precursor of a composition, the curable precursor comprising (a) a radically (co)polymerizable (meth)acrylate-based component, (b) a curing agent, (c) an inorganic filler having a mean particle size of at least 1 µm, and (d) a thixotropic agent which is a carbamate.

The curable precursor may comprise a first part and a second part, i.e., the curable precursor may be in the form of a two-part composition. The curable precursor may also comprise only one part, i.e., the curable precursor may also be in the form of a one-part composition. For curable precursors comprising a first part and a second part, the first part of the curable precursor may comprise (a) a radically (co)polymerizable (meth)acrylate-based component. The second part of the curable precursor may comprise (b) a curing agent. At least one of the first part and the second part may comprise (c) an inorganic filler having a mean particle size of at least 1 µm, and (d) a thixotropic agent which is a carbamate. This means that (i) either the first part, or (ii) the second part, or (iii) both the first part and the second part, may comprise (c) an inorganic filler having a mean particle size of at least 1 µm, and (d) a thixotropic agent which is a carbamate. In other words, if the first part comprises (c) an inorganic filler having a mean particle size of at least 1 µm, then the first part also comprises (d) a thixotropic agent which is carbamate, and if the second part comprises (c) an inorganic filler having a mean particle size of at least 1 µm, then the first part also comprises (d) a thixotropic agent which is carbamate.

A "curable precursor" is meant to designate a composition which can be cured using a curing agent. The term "curing agent" is meant to refer to a substance or a group of substances able to start or initiate or contribute to the curing process of the curable precursor, i.e., to start or initiate or contribute to the radical (co)polymerization of the (meth)acrylate based component. The curing agent may also be referred to as "initiator".

A "radically (co)polymerizable component" is meant to designate a composition which can be cured using a curing agent containing or able to produce a free radical. A radically (co)polymerizable component may contain only one, two, three or more radically polymerizable groups. Typical examples of radically (co)polymerizable groups include unsaturated carbon groups, such as a vinyl group being present, e.g., in a (meth)acrylate group.

As used herein, "(meth)acryl" is a shorthand term referring to "acryl" and/or "methacryl". For example, a "(meth)acrylate based component" refers to "acrylate based component" and/or "methacrylate based component", and "(meth)acrylic acid ester monomers" refers to "acrylic acid ester monomers" and/or "methacrylic acid ester monomers".

As used herein, "(co)polymerizable" is a shorthand term referring to "polymerizable" and/or "copolymerizable".

The composition which is made from the curable precursor disclosed herein may be an adhesive composition. The composition which is made from the curable precursor disclosed herein may also be a non-adhesive composition, such as a sealant composition. A sealant composition may be used, for example, for sealing of electrical components or for sealing of electric batteries, e.g., for sealing of the space between individual battery cells, between battery cells and housing, or between battery cells and cooling plate. The composition which is made from the curable precursor disclosed herein may also be an abrasive composition and may be used for the manufacturing of abrasive articles such as grinding wheels.

The curable precursor disclosed herein comprises (a) a radically (co)polymerizable (meth)acrylate-based component, i.e., a radically (co)polymerizable acrylate-based component or a radically (co)polymerizable methacrylate-based component or a combination thereof.

The radically (co)polymerizable (meth)acrylate-based component may comprise (i) (meth)acrylic acid ester monomers, i.e., acrylic acid ester monomers, or methacrylic acid ester monomers, or a combination thereof.

A "monomer" is any chemical substance which can be characterized by a chemical formula, bearing radically polymerizable unsaturated groups (including (meth)acrylate groups) which can be polymerized to oligomers or polymers thereby increasing the molecular weight. The molecular weight of monomers can usually simply be calculated based on the chemical formula given.

Typically, the (meth)acrylic acid ester monomers are C₁-C₃₂ (meth)acrylic acid ester monomers, i.e., C₁-C₃₂ acrylic acid ester monomers, or C₁-C₃₂ methacrylic acid ester monomers, or a combination thereof. The (meth)acrylic acid ester monomers may be linear or branched (meth)acrylic acid ester monomers.

The (meth)acrylic acid ester monomers for use in the radically (co)polymerizable (meth)acrylate-based component may be selected from the group consisting of iso-octyl (meth)acrylate, 2-ethylhexyl (meth)acrylate, 2-propylheptyl (meth)acrylate, butyl (meth)acrylate, cyclohexyl (meth)acrylate, methyl (meth)acrylate, benzyl (meth)acrylate, hydroxyethyl (meth)acrylate, hydroxypropyl (meth)acrylate, isobornyl (meth)acrylate, tetrahydrofurfuryl (meth)acrylate, and any mixtures thereof.

The radically (co)polymerizable (meth)acrylate-based component of the curable precursor disclosed herein may comprise (ii) an ethylenically unsaturated acidic compound.

An "ethylenically unsatured acidic compound" is meant to include monomers, oligomers, and polymers having ethylenic unsaturation and acid and/or acid-precursor functionality.

Acidic-precursor functionalities include, e.g., anhydrides such as -CO-O-CO-, acid halides and pyrophosphates.

The acidic group preferably comprises one or more carboxylic acid residues, such as -COOH, phosphoric acid residues, such as -O-P(O)(OH)OH, phosphonic acid residues, or sulfonic acid residues, such as -SO₃H.

"Polymer" or "polymeric material" are used interchangeably to refer to a homopolymer, copolymer, terpolymer etc.

Specific examples of ethylenically unsaturated acidic compounds include, but are not limited to glycerol phosphate mono(meth)acrylates, glycerol phosphate di(meth)acrylates, hydroxyethyl (meth)acrylate phosphates, bis glycerol phosphate di(meth)acrylates, bis((meth)acryloxyethyl) phosphate, ((meth)acryloxypropyl) phosphate, bis((meth)acryloxypropyl) phosphate, bis((meth)acryloxy)propyloxy phosphate, (meth)acryloxyhexyl phosphate, bis((meth)acryloxyhexyl) phosphate, (meth)acryloxyoctyl phosphate, bis((meth)acryloxyoctyl) phosphate, (meth)acryloxydecyl phosphate, bis((meth)acryloxydecyl) phosphate, caprolactone methacrylate phosphate, di or tri(meth)acrylated citric acid, poly(meth)acrylated oligomaleic acid, poly(meth)acrylated polymaleic acid, poly(meth)acrylated poly(meth)acrylic acid, poly(meth)acrylated polycarboxyl-polyphosphonic acid, poly(meth)acrylated polychlorophosphoric acid, poly(meth)acrylated polysulfonate, poly(meth)acrylated polyboric acid, and the like.

The reaction products of (meth)acrylic acid with alkane diols (e.g., C₂ to C₂₀ or C₂ to C₁₂ or C₆ to C₁₀) and phosphorous oxide were found to be suitable as well.

Also monomers, oligomers, and polymers of unsaturated carboxylic acids such as (meth)acrylic acid, aromatic (meth)acrylated acids (e g., methacrylated trimellitic acids), and anhydrides thereof can be used. In some embodiments, acrylic acid or methacrylic acid is used as ethylenically unsaturated acidic compound.

The ethylenically unsaturated acidic compound may be used alone or in combination with (meth)acrylic acid ester monomers for the radically (co)polymerizable (meth)acrylate-based component, i.e., the radically (co)polymerizable (meth)acrylate-based component may comprise (meth)acrylic acid ester monomers, or an ethylenically unsaturated acidic compound, or a combination of both.

The curable precursor may comprise from 5 to 90 wt.-%, from 5 to 50 wt.-%, from 5 to 30 wt.%, from 5 to 20 wt.-%, or from 10 to 15 wt.-% of the (meth)acrylate-based component, wherein the weight percentages are based on the total weight of the curable precursor.

The curing agent (b) used herein contains or is able to produce a free radical. Exemplary curing agents for use herein include, but are not limited to, organic peroxides. Organic peroxides include hydroperoxides, ketone peroxides and diacyl peroxides. Examples for hydroperoxides are cumene hydroperoxide, tert-pentyl hydroperoxide, diisopropylbenzene hydroperoxide, and 1,1,3,3-tetramethylbutyl hydroperoxide. An example for a ketone peroxide is methyl ethyl ketone peroxide. An example for a diacyl peroxide is dibenzoyl peroxide. Examples for other organic peroxides are tert-butyl peroxybenzoate, dicumyl peroxide, 1,3-di-(2-tert-butylperoxyisopropyl)benzene, tert-butyl cumyl peroxide, 2,5-dimethyl-2,5-di-(tert-butylperoxy)hexane, and di-tert-butyl peroxide.

Preferably, dibenzoyl peroxide is used as curing agent. Preferably, dibenzoyl peroxide, cumene hydroperoxide, diisopropylbenzene hydroperoxide, tert-butyl peroxybenzoate, or 2,5-dimethyl-2,5-di-(tert-butylperoxy)hexane is used as curing agent.

The curable precursor may comprise from 0.1 to 10 wt.-%, from 0.1 to 5 wt.-%, from 0.1 to 2 wt.-%, or from 0.1 to 1 wt.-%, of the curing agent, for example, based on the total weight of the curable precursor.

The curable precursor comprises (c) an inorganic filler having a mean particle size (d₅₀) of at least 1 µm. The mean particle size (d₅₀) of the inorganic filler may be at least 2 µm, or at least 5 µm, or at least 10 µm.

The mean particle size (d₅₀) is measured by laser diffraction.

The mean particle size (d₅₀) of the inorganic filler may be from 1 to 500 µm, or from 1 to 100 µm, or from 2 to 500 µm, or from 5 to 500 µm, or from 2 to 100 µm, or from 5 to 100 µm, or from 10 to 500 µm, or from 10 to 100 µm.

The inorganic filler may be selected from the group consisting of ceramics, glass, metals, graphite, and combinations thereof.

The inorganic filler may be a thermally conductive filler or a thermally insulative filler, depending on the application. The thermally conductive filler are thermally conductive particles that are used as a filler for the curable precursor to improve thermal conductivity of the cured composition. The thermally insulative filler are thermally insulative particles that are used as a filler for the curable precursor to improve thermal insulation of the cured composition. The inorganic filler may also be an electrically conductive or an electrically insulative filler. Also, mixtures of these fillers may be used, e.g., mixtures of thermally conductive fillers and electrically conductive fillers, mixtures of thermally conductive fillers and electrically insulative fillers, mixtures of thermally insulative fillers and electrically conductive fillers, or mixtures of thermally insulative fillers and electrically insulating fillers. Also, mixtures of thermally conductive fillers and thermally insulative fillers may be used, such as mixtures of thermally conductive fillers and thermally insulative hollow glass microspheres where the hollow glass microspheres have the function of a lightweight additive.

For curable precursors in the form of a two-part composition, the inorganic filler may be comprised in the first part or in the second part of the curable precursor. The inorganic filler may also be comprised in the first and the second part of the curable precursor.

The thermally conductive filler for use herein may be selected from the group consisting of metal oxides, metal nitrides, metal hydroxides, metallic particles, coated metallic particles, ceramic particles, coated ceramic particles, and any combinations or mixtures thereof.

Preferably, the thermally conductive filler is selected from the group consisting of aluminum oxide, aluminum hydroxide, boron nitride, aluminum nitride, silicon nitride, gallium nitride, silicon oxide, magnesium oxide, zinc oxide, zirconium oxide, tin oxide, copper oxide, chromium oxide, titanium oxide, silicon carbide, graphite, magnesium hydroxide, calcium hydroxide, carbon nanotubes, carbon black, carbon fibers, diamond, clay, aluminosilicate, calcium carbonate, barium titanate, potassium titanate, copper, silver, gold, nickel, aluminum, platinum, and any combinations or mixtures thereof.

More preferably, the thermally conductive filler is selected from the group consisting of aluminum oxide, aluminum hydroxide, boron nitride, and any combinations or mixtures thereof.

Even more preferably, the thermally conductive filler is selected from the group consisting of aluminum oxide, aluminum hydroxide, and any combinations or mixtures thereof.

The thermally conductive filler may comprise primary particles, agglomerates of primary particles, or combinations thereof.

The thermally conductive primary particles and agglomerates of primary particles may have isotropic shapes, anisotropic shapes, or combinations thereof.

The thermally conductive primary particles and agglomerates of primary particles may have spherical shapes, platelet shapes, or combinations thereof.

Exemplary thermally conductive primary particles and agglomerates of primary particles for use herein are described, e.g., in EP 3 127 973 A1 (Wieneke et al.).

The thermally insulative filler for use herein may be, e.g., hollow glass microspheres. The thermally insulative filler may be used for thermally insulating compositions or for lightweight applications.

The thermally conductive and/or thermally insulative filler may be further provided with flame-retardancy properties or/and electrical insulation properties.

The inorganic filler as used herein may also be an abrasive filler. The abrasive filler may be selected from the group consisting of alumina, silicon carbide, boron carbide, cubic boron nitride, diamond, and combinations thereof.

The curable precursor may comprise at least 10 percent by weight of the inorganic filler, based on the total weight of the curable precursor. The curable precursor may comprise at least 20 percent by weight, at least 30 percent by weight, at least 40 percent by weight, at least 50 percent by weight, or at least 60 percent by weight of the inorganic filler, based on the total weight of the curable precursor. The curable precursor may comprise at most 95 percent by weight, at most 90 percent by weight, at most 80 percent by weight, or at most 70 percent by weight of the inorganic filler, based on the total weight of the curable precursor. The curable precursor may comprise from 10 to 95 percent by weight, from 20 to 90 percent by weight, from 30 to 90 percent by weight, from 30 to 80 percent by weight, from 40 to 90 percent by weight, from 40 to 80 percent by weight, from 50 to 90 percent by weight, from 50 to 80 percent by weight, from 60 to 90 percent by weight, or from 65 to 85 percent by weight of the inorganic filler, wherein the weight percentages are based on the total weight of the curable precursor.

The curable precursor may comprise from 10 to 95 percent by weight, from 20 to 90 percent by weight, from 30 to 90 percent by weight, from 30 to 80 percent by weight, from 40 to 90 percent by weight, from 40 to 80 percent by weight, from 50 to 90 percent by weight, from 50 to 80 percent by weight, from 60 to 90 percent by weight, or from 65 to 85 percent by weight of the thermally conductive filler, wherein the weight percentages are based on the total weight of the curable precursor.

The curable precursor may comprise from 1 to 40 percent by weight, from 5 to 30 percent by weight, or from 5 to 20 percent by weight of the thermally insulative filler, wherein the weight percentages are based on the total weight of the curable precursor. Typically, the thermally insulative filler is used in combination with other inorganic fillers. For example, if the thermally insulative filler, such as hollow glass microspheres, is used for lightweight applications, a thermally conductive filler may also be added.

The curable precursor disclosed herein comprises a thixotropic agent (d) which is a carbamate.

The carbamate as used for the curable precursor disclosed herein may be selected from the group consisting of a polyurea, a polyurethane, a polyamide, and mixtures thereof.

The carbamate as used herein may be a polymeric urea-urethane. A polymeric urea-urethane is a polymer that comprises urethane and urea functional groups. A polymeric urea-urethane may be regarded as a polyurethane comprising also urea functional groups.

The polymeric urea-urethane may be prepared by a first reaction of a diisocyanate with a polyol; wherein excess diisocyanate is used to form an isocyanate mixture comprising a NCO-terminated urethane prepolymer and excess diisocyanate; and followed by a second reaction of the isocyanate mixture with an amine mixture, wherein the amine mixture comprises at least one primary monoamine and at least one primary diamine. The NCO-terminated urethane prepolymer may also be a doubly NCO-terminated urethane prepolymer.

The amount of the at least one primary diamine in the amine mixture as used for the second reaction is from 0.1 to 45 equivalents, based on 100 equivalents of the amine mixture.

After the second reaction, the polymeric urea-urethane is substantially free of isocyanate and of the at least one primary monoamine and of the at least one primary diamine.

The diisocyanate, polyol, monoamine and diamine used for preparing the polymeric urea-urethane can be single components or mixtures.

The diisocyanate as used for preparing the polymeric urea-urethane may have the general formula OCN-R¹-NCO (I), where R¹ is a linear or branched alkylene group having 1 to 8 carbon atoms, a cycloaliphatic group, an arylene group or an aralkylene group, the abovementioned groups optionally being substituted by C1 to C4 alkyl groups.

The polyol as used for preparing the polymeric urea-urethane may have the general formula HO-R²-OH (II), where R² is a polyester group, polyether group, mixed polyesterpolyether group, polycarbonate group, polyolefin group, part of the polyethers contained in the abovementioned compounds optionally being substituted by styrene oxide.

The monoamine as used for preparing the polymeric urea-urethane may have the general formula R³-NH ₂ (III), where R³ is a linear or branched alkyl group having 2 to 8 carbon atoms, a cycloalkyl group, an arylene group or an aralkylene group, the aforementioned groups optionally containing one or more heteroatoms and / or being substituted by C1 to C4 alkyl groups and / or alkoxy groups or R³ is a group of the type Aryl-CO-NH-.

The diamine as used for preparing the polymeric urea-urethane may have the general formula (IV) HN₂-R⁴-NH ₂ (IV), where R⁴ is a linear or branched alkylene group having 1 to 12 carbon atoms, a cycloaliphatic group, a polyether group, an arylene group or an aralkylene group, the above-mentioned groups optionally are substituted by C1 to C4 alkyl groups, or R⁴ is a group of the type -NH-CO-R⁵-CO-NH-, where R⁵ is a linear alkylene group with 1 to 8 carbon atoms, a single bond or an arylene group.

Suitable carbamates are commercially available from BYK-Chemie GmbH, Wesel, Germany, under the tradenames RHEOBYK-7410 ET, RHEOBYK-D 410, and RHEOBYK-410.

The curable precursor may comprise from 0.1 to 7 wt.-%, or from 0.1 to 5 wt.-%, or from 0.2 to 3 wt.-%, or from 0.2 to 2 wt.-% of the carbamate, based on the total weight of the curable precursor.

Surprisingly, it has been found that the carbamate as used herein allows a thixotropic behavior of the curable precursor for avoiding segregation or separation of the thermally conductive or thermally insulative fillers, respectively, and which allows, after shearing, a low viscous composition with acceptable process time for potting of the thermally conductive or thermally insulative potting compounds.

The curable precursor disclosed herein may further comprise a crosslinker for the (meth)acrylate-based component.

For curable precursors comprising a first part and a second part, the crosslinker may be present in the first part and/or in the second part.

The crosslinker may comprise at least one acid-functional group derived from phosphoric acid and at least one radically (co)polymerizable reactive group.

The at least one acid-functional group derived from phosphoric acid of the crosslinker may comprise at least one P-OH group.

The at least one acid-functional group derived from phosphoric acid of the crosslinker may be selected from the group consisting of monoesters of phosphoric acid, diesters of phosphoric acid, triesters of phosphoric acid, esters of diphosphoric acid, diesters of diphosphoric acid, and any combinations or mixtures thereof.

The at least one acid-functional group derived from phosphoric acid of the crosslinker may be selected from the group consisting of monoesters of phosphoric acid and C₁-C₆ polyol derivatives, diesters of phosphoric acid and C₁-C₆ polyol derivatives, triesters of phosphoric acid and C₁-C₆ polyol derivatives, esters of diphosphoric acid and C₁-C₆ polyol derivatives, diesters of diphosphoric acid and C₁-C₆ polyol derivatives, and any combinations or mixtures thereof.

The at least one acid-functional group derived from phosphoric acid of the crosslinker may be selected from the group consisting of monoesters of phosphoric acid and derivatives of 1,3-isomer of glycerol, diesters of phosphoric acid and derivatives of 1,3-isomer of glycerol, diesters of diphosphoric acid and derivatives of 1,3-isomer of glycerol, and any combinations or mixtures thereof.

The at least one acid-functional group derived from phosphoric acid of the crosslinker may be selected from the group consisting of monoesters of phosphoric acid and derivatives of 1,2-isomer of glycerol, diesters of phosphoric acid and derivatives of 1,2-isomer of glycerol, diesters of diphosphoric acid and derivatives of 1,2-isomer of glycerol, and any combinations or mixtures thereof.

The at least one radically (co)polymerizable reactive group of the crosslinker may be selected from the group consisting of ethylenically unsaturated groups.

The ethylenically unsaturated groups comprised in the crosslinker may be selected from the group consisting of (meth)acrylic groups, vinyl groups, styryl groups, and any combinations or mixtures thereof. Preferably, the ethylenically unsaturated groups are selected from the group consisting of methacrylic groups, acrylic groups, and any combinations or mixtures thereof.

Advantageously, the crosslinker for use herein may be an ethylenically unsaturated compound.

The crosslinker for use in the present disclosure may comprise the reaction product(s) of the reaction of phosphoric acid with either 1,3-glycerol dimethacrylate or 1,2-glycerol dimethacrylate.

The crosslinker for use in the present disclosure may be selected from the group consisting of 1,3-glycerol dimethacrylate phosphate monoester, 1,2-glycerol dimethacrylate phosphate monoester, 1,3-glycerol dimethacrylate phosphate diester, 1,2-glycerol dimethacrylate phosphate diester, 1,3-glycerol dimethacrylate diphosphate diester, 1,2-glycerol dimethacrylate diphosphate diester, and any mixtures thereof.

The crosslinker for the (meth)acrylate-based component may be (co)polymerizable with monomer units (i) and/or (ii) of the (meth)acrylate-based component.

The curable precursor of the present disclosure may comprise from 0.01 to 10 wt.%, from 0.01 to 8 wt.%, from 0.05 to 6 wt.%, from 0.05 to 5 wt.%, from 0.05 to 4 wt.%, from 0.1 to 2 wt.%, or even from 0.1 to 1 wt.%, of the crosslinker for the (meth)acrylate-based component, wherein the weight percentages are based on the total weight of the curable precursor.

The curable precursor disclosed herein may further comprise a polyether oligomer having a number average molecular weight of at least 2000 g/mol and which comprises at least one radically (co)polymerizable reactive group.

For curable precursors comprising a first part and a second part, the polyether oligomer may be present in the first part of the curable precursor.

Unless otherwise indicated, the number average molecular weight of the polyether oligomer for use herein is determined by conventional gel permeation chromatography (GPC) using appropriate techniques well known to those skilled in the art.

Without wishing to be bound by theory, it is believed that the polyether oligomer as described above acts as a reactive diluent and rheological modifier for the curable precursor, which contributes to provide the curable precursor with outstanding flexibility characteristics. For adhesive compositions made from the curable precursor disclosed herein, the polyether oligomer is also believed to beneficially impact the adhesion properties of the curable precursor, due in particular to the beneficial surface wetting properties provided in particular by the oligomeric polyether moiety. The polyether oligomer as described above is also believed to provide advantageous surface interactions with the thermally conductive or thermally insulative fillers, which in turn contribute to enable relatively high loading of thermally conductive or thermally insulative fillers due in particular to the improved compatibility provided between the thermally conductive or thermally insulative fillers and the surrounding (meth)acrylate-based polymeric matrix. Further, the polyether oligomer for use herein is also believed to beneficially impact the shear strength, due in particular to the light crosslinking effect provided by the radically (co)polymerizable reactive group(s), and to provide aging stability and hydrolytic stability.

The polyether oligomer having a number average molecular weight of at least 2000 g/mol and which comprises at least one radically (co)polymerizable reactive group may comprise a (linear) polyether backbone. The polyether oligomer backbone comprised in the polyether oligomer may be obtained by copolymerization of tetrahydrofuran units, ethylene oxide units, and optionally propylene oxide units. The molar ratio of these monomers may be in a range from 1:2.5 to 1:5, or even from 1:3 to 1:4.

The polyether oligomer for use herein may have a number average molecular weight more than 2000 g/mol, more than 2500 g/mol, more than 3000 g/mol, more than 3500 g/mol, or even more than 4000 g/mol.

The polyether oligomer for use herein may have a number average molecular weight of at most 20.000 g/mol, at most 15.000 g/mol, at most 12.000 g/mol, at most 10.000 g/mol, at most 9500 g/mol, at most 9000 g/mol, at most 8500 g/mol, or even at most 8000 g/mol.

The polyether oligomer for use herein may have a number average molecular weight in a range from 2000 to 20.000 g/mol, from 2000 to 15.000 g/mol, from 2000 to 12.000 g/mol, from 2500 to 10.000 g/mol, from 2500 to 9000 g/mol, from 3000 to 8500 g/mol, from 3500 to 8000 g/mol or even from 4000 to 8000 g/mol.

The polyether oligomer for use herein may be an ethylenically unsaturated compound.

The ethylenically unsaturated groups comprised in the polyether oligomer may be selected from the group consisting of (meth)acrylic groups, vinyl groups, styryl groups, and any combinations or mixtures thereof. More preferably, the ethylenically unsaturated groups are selected from the group consisting of methacrylic groups, acrylic groups, and any combinations or mixtures thereof.

The ethylenically unsaturated groups comprised in the polyether oligomer may be methacrylic groups.

The polyether oligomer for use herein may have the following formula: 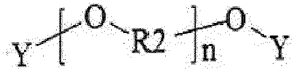 wherein:
Y is a radically (co)polymerizable reactive group, in particular an ethylenically unsaturated group;
each R2 is independently selected from the group consisting of alkylene groups having in particular from 2 to 6 carbons;
and n is an integer selected such that the number average molecular weight of the polyether oligomer is of at least 2000 g/mol.

In one particular aspect, n is selected such that the number average molecular weight is at least 2000 g/mol, at least 3000 g/mol, or even at least 4000 g/mol. In another particular aspect, n is selected such that the number average molecular weight is at most 20.000 g/mol, at most 15.000 g/mol, or even at most 10.000 g/mol. In still another particular aspect, n is selected such that the number average molecular weight is between 2000 and 20.000 g/mol, between 3000 and 15.000 g/mol, or even between 3000 and 10.000 g/mol, where all ranges are inclusive of the end points.

The curable precursor of the present disclosure may comprise from 1 to 60 wt.%, from 1 to 30 wt.%, from 1 to 20 wt.%, from 2 to 15 wt.%, or from 3 to 10 wt.% of the polyether oligomer, wherein the weight percentages are based on the total weight of the curable precursor.

The polyether oligomer is (co)polymerizable with the (meth)acrylic acid ester monomers (i) and the ethylenically unsaturated acidic compound (ii) of the (meth)acrylate-based component (a).

The curable precursor disclosed herein may further comprises a nitroxide. Nitroxides are free radicals comprising a R₂N-O• functional group. They may also be referred to as nitroxyl radicals or aminoxyl radicals.

The nitroxide has the function of an inhibitor for the curable precursor disclosed herein. The nitroxide has the function of an inhibitor and can effectively prevent core polymerization despite the presence of acidic compounds in the curable precursor. Acidic compounds may be comprised as ethylenically unsaturated acidic compound in the radically (co)polymerizable (meth)acrylate-based component of the curable precursor, and acidic compounds may be comprised as at least one acid-functional group derived from phosphoric acid in the crosslinker for the (meth)acrylate-based component.

The nitroxide may be selected from the group consisting of 2,2,6,6-tetramethylpiperidine-1-oxyl (TEMPO), derivatives thereof, and combinations thereof.

The nitroxide may be selected from the group consisting of 2,2,6,6-tetramethylpiperidine-1-oxyl (TEMPO), 4-hydroxy-2,2,6,6-tetramethylpiperidine-1-oxyl (4-hydroxy-TEMPO, TEMPOL), 4-amino-2,2,6,6-tetramethylpiperidine-1-oxyl (4-amino-TEMPO), 4-oxo-2,2,6,6-tetramethylpiperidine-1-oxyl (4-oxo-TEMPO), 1-oxyl-2,2,6,6-tetramethylpiperidine-4-yl acetate, 1-oxyl-2,2,6,6-tetramethylpiperidine-4-yl 2-ethylhexanoate, 1-oxyl-2,2,6,6-tetramethylpiperidine-4-yl stearate, 1-oxyl-2,2,6,6-tetramethylpiperidine-4-yl benzoate, 1-oxyl-2,2,6,6-tetramethylpiperidine-4-yl 4-tert-butylbenzoate, bis(1-oxyl-2,2,6,6-tetramethylpiperidine-4-yl)succinate, bis(1-oxyl-2,2,6,6-tetramethylpiperidine-4-yl)adipate, bis(1-oxyl-2,2,6,6-tetramethylpiperidine-4-yl)sebacate, bis(1-oxyl-2,2,6,6-tetramethylpiperidine-4-yl)n-butylmalonate, bis(1-oxyl-2,2,6,6-tetramethylpiperidine-4-yl)phthalate, bis(1-oxyl-2,2,6,6-tetramethylpiperidine-4-yl)isophthalate, bis(1-oxyl-2,2,6,6-tetramethylpiperidine-4-yl)terephthalate, bis(1-oxyl-2,2,6,6-tetramethylpiperidine-4-yl)hexahydroterephthalate, N, N'-bis(1-oxyl-2,2,6,6-tetramethylpiperidine-4-yl)adipamine, N-1-oxyl-2,2,6,6-tetramethylpiperidine-4-yl-dodecylsuccinimide, 1-oxyl-4-methoxy-2,2,6,6-tetramethylpiperidine, 1-oxyl-4-amino-2,2,6,6-tetramethylpiperidine, and 1-oxyl-4-acetamino-2,2,6,6-tetramethylpiperidine.

Preferably, the nitroxide is 4-hydroxy-2,2,6,6-tetramethylpiperidine-1-oxyl (4-hydroxy-TEMPO, TEMPOL).

The curable precursor may comprise at least 0.001 wt.%, or at least 0.002 wt.%, or at least 0.003 wt.% of the nitroxide, based on the total weight of the curable precursor.

The curable precursor may comprise at most 0.1 wt.%, or at most 0.05 wt.%, or at most 0.02 wt.%, or at most 0.01 wt.%, or at most 0.008 wt.%, or at most 0.006 wt.%, or at most 0.005 wt.%, of the nitroxide, based on the total weight of the curable precursor.

The curable precursor may comprise from 0.001 to 0.3 wt.%, or from 0.001 to 0.1wt.%, or from 0.001 to 0.05 wt.%, or from 0.001 to 0.01 wt.%, or from 0.001 to 0.008 wt.%, or from 0.002 to 0.1 wt.%, or from 0.002 to 0.05 wt.%, or from 0.002 to 0.02 wt.%, or from 0.002 to 0.01 wt.%, or from 0.002 to 0.008 wt.%, or from 0.002 to 0.004 wt.%, or from 0.003 to 0.1 wt.%, or from 0.003 to 0.05 wt.%, or from 0.003 to 0.02 wt.%, or from 0.003 to 0.01 wt.%, or from 0.003 to 0.008 wt.%, or from 0.003 to 0.006 wt.%, or from 0.003 to 0.005 wt.%, or from 0.003 to less than 0.005 wt.%, of the nitroxide, based on the total weight of the curable precursor.

The curable precursor disclosed herein may further comprise a vinyl aromatic compound. The vinyl aromatic compound may be comprised in the first part or in the second part of curable precursors in the form of a two-part composition.

The vinyl aromatic compound takes part in the (co)polymerization reaction of the curable precursor and acts as a comonomer for the (meth)acrylate based component in the curable precursor disclosed herein.

The vinyl aromatic compound may be an organic compound according to general formula (1): 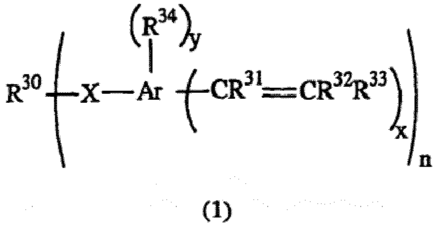 wherein
n is an integer having a value of 1 or greater, preferably 2 or greater;
x is an integer having a value of from 1 to 5, preferably 1;
y is an integer having a value of 0 or greater, preferably 0;
Ar is a substituted aryl group, preferably a substituted benzene group;
R³¹ is selected from the group consisting of alkyl, aryl and halogen, preferably methyl;
R³² and R³³ are independently selected from the group consisting of hydrogen, alkyl, aryl and halogen, preferably hydrogen;
R³⁴ is an organic group wherein each R³⁴ is independently selected from the group consisting of alkyl, alkoxy, alkanoyl, alkanoyloxy, aryloxy, aroyl, aroyloxy, and halogen;
X is a divalent organic linking group or a covalent bond;
R³⁰ is an organic group;
wherein a total molecular weight of each X plus R³⁰ in said vinyl aromatic compound is 100 or greater.

In formula (1), subscript x, which represents an integer having a value of 1 or greater, represents the number of unsaturated moieties bonded to each Ar group in the vinyl aromatic compound.

In formula (1), X represents either a divalent organic linking group or a covalent bond. Preferably, X is a divalent organic linking group comprising a urethane or a urea functional group. More preferably, X is: 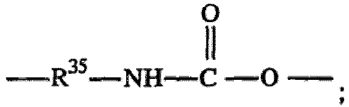 or 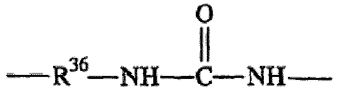 wherein R³⁵ and R³⁶ are divalent organic linking groups having from 1-10 carbon atoms. If present, R³⁵ and R³⁶ are bonded to the aryl group (Ar) of formula (1).

In formula (1), R³⁰ represents an organic group, preferably an oligomeric or polymeric organic group. The total molecular weight of each X plus R³⁰ is 100 or greater, more preferably 200 or greater, and most preferably 500 g/mol or greater. Representative examples of polymeric organic groups include hydrocarbon polymers (e.g., polyethylene, polystyrene, polypropylene, and polymethylpentene), carbon chain polymers (e.g., polyvinyl chloride, polyvinylidene chloride, and polyacrylonitrile), heterochain polymers (e.g., polyethers, polyamides, polyesters, polyurethanes, polysulfides, polysulfone, and polyimide). Suitable polymeric organic groups may be homopolymers or copolymers, for example, copolymers and terpolymers and may be alternating, random, block, or graft in structure. Typically, the total molecular weight of each X plus R³⁰ is from 100 to 20000 g/mol. Preferred organic groups R³⁰ include polyesters (e.g., polycaprolactone) having a molecular weight ranging from about 300-1000 g/mol and polyethers having a molecular weight ranging from about 500-3000 g/mol.

In formula (1), if n is 1, the vinyl aromatic compound is also referred to as a monofunctional vinyl aromatic compound. If n is 2, the vinyl aromatic compound is also referred to as a difunctional vinyl aromatic compound. If n is 3, the vinyl aromatic compound is also referred to as a trifunctional vinyl aromatic compound.

Preferred difunctional vinyl aromatic compounds of formula (1) are represented below in general formula (1B) wherein, with reference to formula (1), Ar is a benzene ring, y is 0, R³¹ is methyl, R³² and R³³ are hydrogen, x is 1, and n is 2. The bonding structure to the benzene rings is shown generally and may be independently on each ring ortho, meta or para.

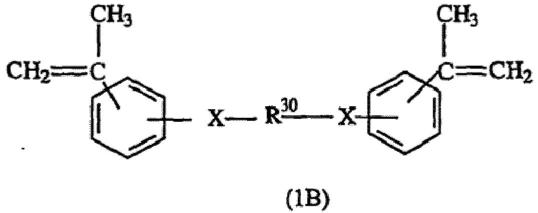

In formula (1B), X is a divalent organic group or a covalent bond as explained above for formula (1), R³⁰ is an organic group as explained above for formula (1). The total molecular weight of each X plus R³⁰ is 100 g/mol or greater, more preferably 200 g/mol or greater, and most preferably 500 g/mol or greater. Typically, the total molecular weight of each X plus R³⁰ is from 100 to 20000 g/mol.

Representative examples of the difunctional vinyl aromatic compounds of formula (1B) are α-methylstyrene functional polyether oligomers having urea linkages or urethane linkages.

Useful vinyl aromatic compounds of general formula (1) may be prepared, for example, by reacting 3-isopropenyl-α,α-dimethylbenzyl isocyanate (commercially available under the trade designation "TMI" from Cytec Industries, West Peterson, NJ) with a mono- or multi-functional reactive hydrogen compound, preferably a mono- or multi-functional amine, alcohol or combination thereof. Particularly preferred mono- and multi-functional amines include the amine terminated polyethers commercially available under the trade designation "JEFFAMINE" (from Huntsman Chemical Co., Houston, TX, USA), for example "JEFFAMINE ED600" (a diamine terminated polyether having a reported molecular weight of 600), "JEFFAMINE D400" (a diamine terminated polyether having a reported molecular weight of 400), "JEFFAMINE D2000" (a diamine terminated polyether having a reported molecular weight of 2000), "JEFFAMINE T3000" (a tramine terminated polyether having a reported molecular weight of 3000), and "JEFFAMINE M2005" (a monoamine terminated polyether having a reported molecular weight of 2000). Suitable alcohol-containing compounds include, for example, polypropylene glycol, polycaprolactone triol, and diethylene glycol.

The curable precursor may comprise from 1 to 50 wt.%, from 1 to 20 wt.%, from 2 to 30 wt.%, from 2 to 20 wt.%, or from 10 to 30 wt.% of the vinyl aromatic compound, wherein the weight percentages are based on the total weight of the curable precursor.

The curable precursor disclosed herein may further comprise an accelerator for radically (co)polymerizing the curable precursor. The accelerator may be comprised in the second part of the curable precursor.

The accelerator may be a base.

As used herein, by "base", it is meant an Arrhenius base. Further, by "base", it is meant a substance that, when dissolved in an aqueous solution, increases the concentration of hydroxide (OH⁻) ions in the solution.

The base may be a tertiary amine, or a combination of tertiary amines.

The tertiary amine has the formula R¹R²R³-N, where R¹, R² and R³ are independently alkyl groups or aryl groups. Suitable tertiary amine bases include, but are not limited to, p-toluidine ethoxylate (synonymous with N,N-bis(2-hydroxyethyl)-p-toluidine), N,N-dimethyl-p-toluidine, N,N-dimethylaniline, N,N-diethylaniline, and diisopropyl p-toluidine.

The accelerator may also be sulfinic acid; an azo compound such as azoisobutyric acid dinitrile; an alpha-aminosulfone such as bis(tolylsulfonmethyl)-benzyl amine; propane sulfonyl chloride; para-toluene sulfonyl chloride; and an aldehyde-amine condensation product, for example the condensation product of an aliphatic aldehyde such as butyraldehyde with a primary amine such as aniline or butylamine.

The accelerator may also be an Fe(II)-salt such as Fe(II)-sulfate.

The curable precursor may comprise from 0.1 to 5 wt.%, or from 0.1 to 3 wt.%, of the accelerator, for example, based on the total weight of the curable precursor.

The curable precursor may further comprise additives such as dispersing agents, antioxidants, flame retardants, or dyes.

According to another advantageous aspect of the disclosure, the curable precursor is (substantially) free of solvent(s), in particular organic solvent(s).

The curable precursor of the present disclosure may be in the form of a one-part composition. The curable precursor of the present disclosure may also be in the form of a two-part composition having a first part and a second part, wherein the first part and the second part are kept separated prior to combining the two parts and forming the cured composition.

In an advantageous aspect of the disclosure, the two parts of the curable precursor may be mixed with a mixing ratio of the first part to the second part in a range from 10:1 to 1:1, or from 5:1 to 3:1. Preferably, the two parts of the curable precursor may be mixed with a mixing ratio of the first part to the second part of 4:1.

Further disclosed herein is also a process for making a cured composition from the curable precursor as disclosed herein, the process comprising
providing a curable precursor, wherein the curable precursor comprises
   (a) a radically (co)polymerizable (meth)acrylate-based component,
   (b) a curing agent,
   (c) an inorganic filler having a mean particle size (d₅₀) of at least 1 µm, and
   (d) a thixotropic agent which is a carbamate; and
curing the curable precursor.

For curable precursors in the form of a two-part composition, the process for making a cured composition from the curable precursor disclosed herein comprises
providing a curable precursor, wherein the curable precursor comprises a first part and a second part, and wherein the first part comprises
   (a) a radically (co)polymerizable (meth)acrylate-based component, and wherein the second part comprises
   (b) a curing agent,
      and wherein at least one of the first part and the second part comprises
   (c) an inorganic filler having a mean particle size (d₅₀) of at least 1 µm, and
   (d) a thixotropic agent which is a carbamate;
mixing the first and the second part of the curable precursor; and
curing the mixture of the first and the second part of the curable precursor.

All the particular and preferred aspects relating to, in particular, the (meth)acrylate-based component, the curing agent and the inorganic filler which were described hereinabove in the context of the curable precursor, are fully applicable to the method as described above.

For curable precursors in the form of a two-part composition, the first and the second part of the curable precursor can be extruded from a 2K cartridge or a 2K system using a static or dynamic mixer.

After mixing or shearing, the curable precursor is castable. The curable precursor has, after mixing or shearing, a low viscosity for a sufficient amount of time which allows casting, i.e., pouring, of the curable precursor. Typically, after mixing or shearing, the curable precursor has a low viscosity sufficient for casting, for a few minutes, e.g., for 2 minutes, depending on the concentration.

As used herein, "hardening" or "curing" a composition or mixture are used interchangeably and refer to (co)polymerization and/or crosslinking reactions including chemical (co)polymerization techniques (e. g., chemical reactions forming radicals effective to (co)polymerize radically (co)polymerizable compounds such as ethylenically unsaturated compounds) involving one or more materials included in the composition.

For curable precursors in the form of a two-part composition, curing can be carried out very fast at room temperature, without the need of UV light or increased temperatures.

For curable precursors in the form of a one-part composition, curing can be carried out as a thermal curing using increased temperatures, or by the use of UV light with suitable UV curing agents known in the art.

The cured composition made by the process disclosed herein may be in the form of an adhesive, a sealant, a gap filler, an encapsulation material, or an abrasive article. The gap filler may be an adhesive gap filler or a sealant gap filler (or both). The abrasive article may be, e.g., a grinding wheel.

In the context of the present disclosure, the expression "gap filler" is meant to designate a composition that is used to at least partially fill a spatial gap between a first and a second surface. After mixing the first and the second part of the curable precursor, the curable precursor can flow into the spatial gap between a first and a second surface and fill it. For adhesive gap fillers, after curing of the curable precursor, the cured composition provides an adhesive bond between the first and the second surface with good mechanical properties and good adhesive strength. The first surface may be a battery cell of an electric vehicle, and the second surface may be a cooling plate. The gap filler may be a thermally conductive gap filler, by addition of thermally conductive particles.

Curing may be carried out at a temperature below 90 °C, or at a temperature of at most 50 °C, or at most 30 °C, or at room temperature (23 °C). For curable precursors in the form of a two-part composition, curing preferably is carried out at room temperature (23 °C).

Typically, curing is carried out for at most 1 hour. Curing may be carried out for at most 45 minutes, or for at most 30 minutes. If the cured composition is an adhesive composition, typically, after a curing time of 30 minutes at room temperature (23 °C), a cured composition having an adhesive strength of at least 0.7 MPa is obtained. The adhesive strength of the cured composition after a curing time of 30 minutes at room temperature (23 °C) may be at least 1 MPa, or at least 2 MPa, or at least 3 MPa, depending on the amount of curing agent that has been used. If the cured composition is a sealant composition, after a curing time of 30 minutes at room temperature (23 °C), a cured composition having an adhesive strength of up to 0.7 MPa may be obtained.

According to an advantageous aspect, the curable precursor of the disclosure is curable at 23°C at a curing percentage greater than 90%, greater than 95%, greater than 98%, or even greater than 99%, after a curing time no greater than 72 hours, no greater than 48 hours, or even no greater than 24 hours, depending on the amount of curing agent that has been used.

The curing time may be adjusted as desired depending on the targeted applications and manufacturing requirements.

For curable precursors comprising a thermally conductive filler, the cured composition made by the process disclosed herein may have a thermal conductivity of at least 0.1 W/mK, at least 0.3 W/mK, at least 0.5 W/mK, at least 0.7 W/mK, at least 1.0 W/mK, at least 1.2 W/mK, or at least 1.5 W/mK, when measured according to the test method described in the experimental section.

For curable precursors comprising a thermally insulative filler, the cured composition made by the process disclosed herein may have a thermal conductivity of at most 0.2 W/m*K. The thermal conductivity of cured compositions made from a curable precursor comprising a thermally insulating filler may also be higher than 0.2 W/m*K.

The cured composition made by the process disclosed herein may have an overlap shear strength (OLS) of at least 0.1 MPa, at least 2.0 MPa, at least 2.5 MPa, at least 3.0 MPa, at least 3.5 MPa, at least 4.0 MPa, or at least 4.5 MPa, when measured according to the test method described in the experimental section, at a temperature of 23 °C.

The cured composition made by the process disclosed herein may have an overlap shear strength (OLS) in a range from 0.1 to 30.0 MPa, from 1.0 to 8.0 MPa, from 1.5 to 8.0 MPa, from 2.0 to 7.0 MPa, from 2.5 to 7.0 MPa, from 3.0 to 6.5 MPa, or from 3.5 to 6.0 MPa, when measured according to the test method described in the experimental section, at a temperature of 23 °C.

The cured composition may have an elongation at break of at least 5%, at least 8%, or at least 10%, when measured according to the test method described in the experimental section. The elongation at break of the cured composition may also be lower than 5%.

The curable precursor as disclosed herein and the cured composition made from the curable precursor may be used
for thermal management applications in the automotive and electronic industry,
as an electrically insulating composition in the electronic industry and for cable insulation, and
as a color pigment comprising composition in the coating and paint industry.

For example, the curable precursor and the cured composition as described above may be used for the manufacturing of a battery module comprising a plurality of battery cells, in particular for use in the automotive industry, for thermal management and/or electrical insulation.

As another example, the curable precursor and the cured composition as described above may be used as an encapsulation material in the electronic industry, for thermal management and/or electrical insulation.

As a further example, the curable precursor and the cured composition as described above may be used as a color pigment comprising composition in the coating and paint industry. The inorganic filler comprised in the curable precursor in these applications may comprise a color pigment.

### Examples

### Test Methods

### Preparation of the formulations for testing:

The samples for testing the mechanical and thermal behavior are prepared from a 4:1 (vol ratio) mixture of two components (Part A : Part B) extruded from a 2K cartridge using a static mixer (standard 3M gold Quadro nozzle for 50 mL cartridges or SULZER MF 10-18 nozzles for 200 mL cartridges). The preparation of both parts is described hereinafter. Within the open time, the obtained paste is applied to the surface of the test panel as a 2 mm film. The surface of test samples (25 mm * 100 mm * 4 mm) for the overlap shear strength test (aluminum, grade EN AW2024T3) are sandblasted before bonding using pure corundum with a grain size of about 135 micrometers. The test samples are left at ambient room temperature (23 °C +/- 2 °C, 50% relative humidity +/-5 %) for 7 days. The various performance testing are measured as described below.

### 1. Thermal Conductivity Test

The thermal conductivity of the cured compositions is measured according to ASTM E1461 at 23°C with Laser Flash Analysis (LFA) using Light Flash Apparatus LFA 467 HyperFlash^{®}, commercially available from Netzsch GmbH, Germany, on samples having a thickness of 1 mm or 2 mm.

### 2. Overlap Shear Strength (OLS) according to DIN EN 1465

Overlap shear strength is determined according to DIN EN 1465 using a Zwick Z050 tensile tester (commercially available by Zwick GmbH & Co. KG, Ulm, Germany) operating at a cross head speed of 10 mm/min. For the preparation of an overlap shear strength test assembly, the paste resulting from the mixing of Part A and Part B is spackled onto one surface of a test panel. The aluminum EN AW2024T3 test panels are sandblasted before bonding. Afterwards, the sample is covered by a second aluminum strip forming an overlap joint of 13 mm. Hereby, the use of glass beads having a selected diameter distribution ensured formation of a bond line having a thickness of about 300 micrometers. The overlap joints are then clamped together using two binder clips and the test assemblies are further stored at room temperature for 7 days after bonding, and then placed into an air circulating oven for 30 minutes at 80 °C. The samples are either tested directly at room temperature or undergo aging and are tested thereafter. At least three samples are measured for each of the examples and results averaged and reported in MPa.

### 3. Tensile measurements according to DIN EN ISO 527-2-5A

Tensile measurements (tensile strength, elongation at break and elastic modulus) are carried out according to DIN ISO 527-2-5A using a Zwick Z050 tensile tester (commercially available by Zwick GmbH & Co. KG, Ulm, Germany) operating at a cross head speed of 10 mm/min. Films having a thickness of about 2 mm are prepared according to the procedure described above. At least three samples having a dog bone shape are stamped according to the geometry of DIN ISO 527-2-5A (dimensions 25 mm × 4 mm × 2 mm) and used for further mechanical testing. Measurements are done for each of the samples and the results are averaged and reported in MPa for the tensile strength and in percentage for the elongation at break.

### 4. Viscosity measurements

Viscosity of the test samples is measured at 20 °C with an Anton Paar rheometer MCR 302 using RheoCompass software from Anton Paar. The measurements were done using a frequency sweep at shear rates from 0.1 to 5 s⁻¹. 90 measurement points were taken one every 2 s at 0.1 s⁻¹, 20 measurement points were taken one every 2 s at 0.5 s⁻¹, 20 measurement points were taken one every 1 s at 1.0 s⁻¹, and 40 measurement points were taken one every 0.5 s at 5 s⁻¹. Further measurements were done using a frequency sweep at shear rates from 0.1 to 25 s⁻¹.

### 5. Particle size measurements

The mean particle size (d₅₀) is measured by laser diffraction, using a Cilas 1064 particle size analyser.

### Raw materials

In the examples, the following raw materials are used.

2-Ethylhexylacrylate (2-EHA) is an acrylic acid ester monomer obtained from BASF, Germany.

2-Ethylhexyl methacrylate (2-EHMA) is an acrylic acid ester monomer obtained from BASF, Germany.

2-Hydroxyethyl methacrylate (HEMA 97) is a monomer obtained from Evonik, Germany.

Cyclohexyl methacrylate (CHMA) is an acrylic acid ester monomer obtained from BASF, Germany.

Acrylic acid (AA) is a monomer obtained from Sigma-Aldrich, Germany.

Alpha methyl styryl polyurea resin (AMSPU) is an α-methylstyrene functional polyether oligomer having urea linkage according to formula 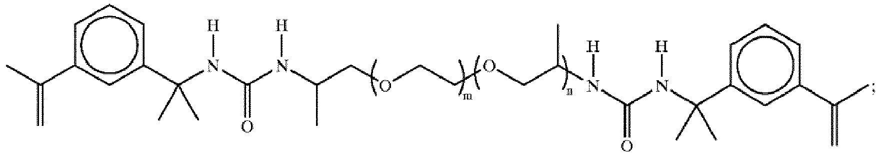 where n and m each ranges from 0 to 50. The α-methylstyrene functional oligomer having urea linkage (vinyl aromatic compound) was prepared as follows: 120 g (0.6 moles) of 3-isopropenyl-α,α-dimethylbenzyl isocyanate (commercially available as TMI from Cytec Industries, West Peterson, NJ, USA) and 600 g (0.6 amine equivalents) of amine-terminated polyether (D2000, difunctional amine-terminated polyether, commercially available as JeffamineTM D2000 from Huntsman Chemical Co., Houston, TX, USA, nominal reported MW 2000) were combined with stirring at room temperature in a glass vessel and allowed to stand at room temperature overnight. Infrared spectroscopy (IR) indicated complete reaction by disappearance of the 2265 cm-1 isocyanate band. The calculated molecular weight of the α-methylstyrene functional oligomer is 2460 g/mol.

Peroxan BP-Paste 50 PF-1 is dibenzoyl peroxide, a curing agent for polymerization, which is obtained from Pergan GmbH, Germany.

Diol-6000-DMA is a dimethacrylate polyether oligomer having a number average molecular weight of about 6000 g/mol, and which is obtained from 3M Espe GmbH, Germany.

GLP is a dimethacrylate crosslinker derived from phosphoric acid, and which is obtained from 3M Espe GmbH, Germany.

Martoxid TM 2250 is a thermally conductive and flame retardant filler based on coated aluminum oxide, which is obtained from Martinswerk, Germany. The mean particle size (d₅₀) is 1.6 µm.

B53 is an aluminum hydroxide-based flame retardant and thermally conductive filler, which is obtained from Nikkeikin, Japan. The mean particle size (d₅₀) is 55 µm.

Apyral 200SM is an aluminum hydroxide-based thermally conductive and flame retardant filler, which is obtained from Nabaltec, Germany. The mean particle size (d₅₀) is 0.4 µm.

Martinal TM 2550 is an aluminum hydroxide-based thermally conductive and flame retardant filler, which is obtained from Martinswerk, Germany. The mean particle size (d₅₀) is 2.0 µm.

Martinal TM 2590 is an aluminum hydroxide-based thermally conductive and flame retardant filler with a d₉₀ of 90 µm, which is obtained from Martinswerk, Germany.

Martinal ON908 is an aluminum hydroxide-based thermally conductive and flame retardant filler with a mean particle size of 8 µm, which is obtained from Martinswerk, Germany.

BF083 is an aluminum hydroxide-based thermally conductive and flame retardant filler with a mean particle size of 10 µm, which is obtained from Nikkeikin, Japan.

Pergaquick A150 PM is p-toluidine ethoxylate, a base, which is obtained from Pergan GmbH, Germany.

Irganox 1076 is an antioxidant, which is obtained from BASF, Germany.

Irgazin Red L 3670 HD is a red pigment, which is obtained from BASF, Germany.

SR9050 is a mixture of methacrylate acid ester and 2-(2-ethoxyethoxy)ethyl acrylate (monofunctional adhesion promoting agent), available from Sartomer (Arkema Group), Exton, Pennsylvania, USA.

4-hydroxy-2,2,6,6-tetramethylpiperidine-1-oxyl (4-OH-TEMPO, TEMPOL) is a nitroxide obtained from Evonik Industries AG, Germany.

Poly THF650 (polytetrahydrofuran) is a plasticizer obtained from BASF, Germany.

Sovermol 1055 is a natural oil-based fatty acid ester polyol with epoxy groups (plasticizer), obtained from BASF, Germany.

RHEOBYK-7410 ET is a liquid rheology additive (carbamate; solution of a modified urea in amide ether), obtained from BYK-Chemie GmbH, Wesel, Germany.

RHEOBYK-D 410 is a liquid rheology additive (carbamate; solution of a modified urea in dimethyl sulfoxide), obtained from BYK-Chemie GmbH, Wesel, Germany.

K37 are lightweight hollow glass microspheres with a density of 0.37 g/cm³ (thermally insulative filler) obtained from 3M Company, St. Paul, Minnesota, USA. The mean particle size (d₅₀) is 45 µm.

### Example 1 (EX1) and Comparative Examples 1 (CEX1)

For Example 1, the first part (Part A) of a curable precursor in the form of a two-part composition is prepared by combining the ingredients from the list of materials of Table 1 in a 100mL speed mixer cup (speed mixer DAV 150FV, available from Hauschild Engineering, Germany) stirring at 3500 rpm until a homogeneous mixture is achieved. The material is then slightly degassed to avoid entrapped air. The monomers (2-EHA, AA), the carbamate, Diol-6000-DMA, and Pergaquick A150PM are added first to the speed mixer cup and mixed together for 90 seconds. After that, the thermally conductive fillers are added one by one followed by an additional mixing step. During the mixing, the temperature of the mixing shall not exceed 40 °C. Comparative Example 1 is prepared in the same manner as Example 1, with the exception that the carbamate is not added to the composition. For EX1 and CE1, 100 g of the first part of the curable precursor (Part A) are prepared.

**Table 1:**

| **Raw material** | **EX1 Part A** [g] | **CEX1 Part A** [g] |
|---|---|---|
| 2-EHA | 20.0 | 20.0 |
| Diol-6000-DMA | 2.0 | 2.0 |
| AA | 2.0 | 2.0 |
| RHEOBYK-D 410 | 0.5 | --- |
| B53 | 10.0 | 10.0 |
| BF083 | 10.0 | 10.0 |
| Pergaquick A150 PM | 0.1 | 0.1 |

Both formulations are allowed to rest for 24 hours in a transparent 1L beaker. After 24 hours, Example 1 is still homogenous, no phase separation can be observed. Comparative Example 1 (without the carbamate) has separated into two phases, a first clear phase in an upper portion of the beaker, above a second white phase in the lower portion of the beaker. The thermally conductive fillers have sedimented and are comprised in the second white phase in the lower portion of the beaker, they are not present in the first clear phase in the upper portion of the beaker. As Comparative Example 1 has separated into two phases, the composition is not pourable or castable.

For Example 1, no sedimentation is observed after two months at room temperature.

After shearing or mixing, Example 1 has a low viscosity and is castable. The viscosity after shearing or mixing does not increase immediately as with casual thixotropic additives, which allows pouring or casting of the composition before the thixotropic effect is fully restored and viscosity has increased again. The thixotropic effect is observed after more than 2 minutes. This effect can also be referred to as "soft thixotropic effect".

### Examples 2 to 4 (EX2 to EX4) and Comparative Example 2 (CEX2)

For Examples 2 to 4, the first part (Part A) of a curable precursor in the form of a two-part composition is prepared by combining the ingredients from the list of materials of Table 2 in a 100mL speed mixer cup (speed mixer DAV 150FV, available from Hauschild Engineering, Germany) stirring at 3500 rpm until a homogeneous mixture is achieved. The material is then slightly degassed to avoid entrapped air. The monomers (2-EHA, AA, 2-EHMA, CHMA, HEMA 97), the carbamate, and other additives with the exception of the inorganic fillers are added first to the speed mixer cup and mixed together for 90 seconds. After that, the various thermally conductive and thermally insulative fillers were added one by one followed by an additional mixing step. During the mixing, the temperature of the mixing shall not exceed 40 °C. For Examples 2 to 4, 100 g of the first part of the curable precursor (Part A) are prepared.

For Comparative Example 2, the first part (Part A) of the curable precursor is prepared by combining the ingredients from the list of materials of Table 2 in a 10L butterfly mixer and mixing for 120 minutes until a homogeneous mixture is achieved. The acrylic acid ester monomers, the ethylenically unsaturated acidic compound (acrylic acid) and the crosslinker are added first, followed by the polyether oligomer, the various thermally conductive particles and other additives in successive steps. During the mixing, the temperature of the mixing shall not exceed 40 °C. For Comparative Example 2, 5 kg of the first part of the curable precursor (Part A) are prepared. Comparative Example 2 is prepared without the carbamate additive.

For Examples 2 to 4, and for Comparative Example 2, the second part (Part B) of the curable precursor is prepared by combining the ingredients from the list of materials of Table 3 in a 100mL speed mixer cup (speed mixer DAV 150FV, available from Hauschild Engineering, Germany) stirring at 3500 rpm until a homogeneous mixture is achieved. The material is then slightly degassed to avoid entrapped air. The alpha methylstyryl polyurea resin and Sovermol 1055 (or water, respectively) are added first to the speed mixer cup and mixed together for 90 seconds. After that, the various thermally conductive and thermally insulative fillers are added one by one followed by an additional mixing step for 90 seconds. Next, the inhibitors are added followed by an additional mixing step for 90 seconds. Last, the curing agent (radical initiator) is added and mixed for 20 seconds. During the mixing, the temperature of the mixing shall not exceed 40 °C. For Examples 2 and 3, 25 g of the second part of the curable precursor (Part B) are prepared. For Example 4, 200 g of the second part of the curable precursor are prepared.

For Comparative Example 2, the second part of the curable precursor is prepared by combining the ingredients from the list of materials of Table 3 in a 10L butterfly mixer and mixing for 60 minutes until a homogeneous mixture is achieved. The alpha methylstyryl polyurea resin and the various thermally conductive particles are added first, followed by the peroxide and other additives in successive steps one by one. During the mixing, the temperature of the mixing shall not exceed 40 °C. For Comparative Example 2, 5 kg of the second part of the curable precursor (Part B) are prepared.

**Table 2:**

| **Raw material** | **EX2 Part A** [g] | **EX3 Part A** [g] | **EX4 Part A** [g] | **CEX2 Part A** [wt.-%] |
|---|---|---|---|---|
| 2-EHA | 6.54 | 15.68 | 16.22 | 9.607 |
| HEMA 97 | 4.59 | 10.99 | 7.0 | --- |
| 2-EHMA | --- | --- | 2.69 | --- |
| CHMA | 1.23 | 2.95 | 2.61 | 1.488 |
| Diol-6000-DMA | 4.55 | 10.90 | 6.19 | 9.605 |
| GLP | --- | --- | --- | 0.868 |
| AA | 0.53 | 1.26 | 1.11 | 0.744 |
| RHEOBYK-7410 ET | 1.38 | 1.53 | --- | --- |
| RHEOBYK-D 410 | --- | --- | 0.42 | --- |
| B53 | 18.23 | --- | --- | 11.953 |
| Apyral 200SM | --- | --- | --- | 4.960 |
| K37 | --- | 19.05 | 18.96 | --- |
| Martinal TM 2590 | 19.86 | --- | --- | 12.623 |
| BF083 | 27.40 | --- | --- | --- |
| Martinal TM 2550 | 14.44 | 34.63 | 42.145 | 15.872 |
| Martinal ON908 | --- | --- | --- | 31.794 |
| SR9050 | 0.86 | 2.06 | 1.82 | --- |
| 4-OH-TEMPO | --- | 0.01 | 0.005 | 0.005 |
| Pergaquick A150 PM | 0.39 | 0.94 | 0.83 | 0.471 |
| Irganox 1076 | --- | --- | --- | 0.01 |

**Table 3:**

| **Raw material** | **EX2 Part B** [g] | **EX3 Part B** [g] | **EX4 Part B** [g] | **CEX2 Part B** [wt.-%] |
|---|---|---|---|---|
| Poly THF650s | --- | 5.3 | 44.18 | --- |
| AMSPU | 2.42 | --- | --- | 21.71 |
| Sovermol 1055 | 2.21 | 4.85 | 40.43 | --- |
| Martinal TM 2550 | 10.78 | 8.90 | 74.19 | 34.56 |
| K37 | --- | 4.63 | 30.80 | --- |
| B53 | 9.13 | --- | --- | 41.47 |
| 4-OH-TEMPO | --- | --- | --- | 0.02 |
| Peroxan BP-Paste 50 PF-1 | 0.46 | 1.32 | 10.40 | 2.00 |
| Irganox 1076 | --- | --- | --- | 0.02 |
| Irgazin Red L 3670 HD | --- | --- | --- | 0.01 |
| Water dest. | --- | --- | --- | 0.20 |

Comparative Example 2 (Part A, and also the mixture of Part A and Part B) has a pasty consistency and is not pourable or castable.

After shearing or mixing, Examples 2 to 4 (Part A; and also the mixture of Part A and Part B prepared as described below) have a low viscosity and are pourable or castable. Despite the low viscosity, no phase separation can be observed (for Part A; and also for the mixture of Part A and Part B prepared as described below).

The viscosity after shearing or mixing does not increase immediately as with casual thixotropic adhesives, which allows pouring or casting of the composition before the thixotropic effect is fully restored and viscosity has increased again. The thixotropic effect was observed after more than 2 minutes. This effect can also be referred to as "soft thixotropic effect". This "soft thixotropic effect" can be observed for Part A alone, and for the mixture of Part A and Part B (the mixture being prepared as described hereinafter).

After having prepared separately the first and the second part of the curable precursor, the two parts are filled in a Part A : Part B = 4 : 1 volume ratio into a 2K cartridge and the mixture is applied to the surface of the test panel as described above, to generate films and samples for testing mechanical and thermal properties using a room temperature curing step.

The samples for testing the mechanical and thermal behavior were extruded from a Part A : Part B = 4 : 1 2K cartridge using a static mixer (SULZER MF 10-18 for 200mL cartridges). 2 mm films were produced, dumbbell stress-strain samples ("dog-bones") were punched out using a norm-conform die cutting tool and tested according to DIN EN ISO 527-2-5A. Overlap shear (OLS) samples are made according to DIN EN 1465. Aluminum EN AW2024T3 substrates were sandblasted before bonding, using pure corundum with a mean grain size of 135 µm. Thermal conductivity is measured with Laser Flash Analysis (LFA) with a sample thickness of 1 mm or 2 mm. Measurements are carried out as described above in the Test Methods Section.

Test results are shown in Table 4, Table 5, and Table 6. Table 4 shows the results after 24 hours curing at room temperature (23 °C). For Example 3 and Comparative Example 2, the test for 10 days at 40 °C and 100% humidity was carried out according to DIN EN ISO 6270 (Table 5). The curing test for 10 days at 40 °C and 100% humidity is a test for accelerated aging of the cured adhesives. For Example 2, also a cyclic curing test between -30 °C and +90 °C (at 80% humidity) was carried out for 10 days (Table 5).

**Table 4:**

| | **EX2** | **EX3** | **EX4** | **CEX2** |
|---|---|---|---|---|
| Thermal conductivity [W/mK] | 1.75 | 0.3 | n.m.^{*)} | 1.6 |
| Overlap shear strength [MPa] | 5.0 | 3.1 | 3.0 | 4.9 |
| Tensile strength [MPa] | 5.5 | 2.1 | 2.3 | 4.8 |
| Elastic modulus [MPa] | 79 | 18.4 | 3.8 | 123 |
| Elongation at break [%] | 13 | 17 | 19 | 12.3 |

| | | | | |
|---|---|---|---|---|
| ^{*)} n.m. = not measured | | | | |

**Table 5:**

| | **EX2** | **EX3** | **CEX2** |
|---|---|---|---|
| Curing conditions | 10d, cyclic -30°C - +90°C | 10d, 40 °C (100% humidity) | 10d, 40 °C (100% humidity) |
| Overlap shear strength [MPa] | 5.68 | 4.32 | 5.2 |
| Tensile strength [MPa] | 8.6 | 6.7 | 4.8 |
| Elastic modulus [MPa] | 374 | 236 | 140 |
| Elongation at break [%] | 8.1 | 8.27 | 10.4 |

**Table 6:**

| | **EX4** | **EX4** | **EX4** |
|---|---|---|---|
| Measuring temperature | -40 °C | +21 °C | +80 °C |
| Overlap shear strength [MPa] | 14.9 | 3.08 | 2.4 |

The resulting cured compositions of the curable precursors as disclosed herein have good mechanical properties.

Viscosity measurements at different shear rates for Example 2 and Comparative Example 2 were carried out as described in the Methods Section above. The results are shown in Table 7.

**Table 7:**

| | **EX2 Part A** | **EX2 Part B** | **CEX2 Part A** | **CEX2 Part B** |
|---|---|---|---|---|
| Viscosity at 0.1/s [Pa·s] | 280 | 318 | 800 | 657 |
| Viscosity at 0.5/s [Pa·s] | 125 | 99 | 398 | 256 |
| Viscosity at 1.0/s [Pa·s] | 84 | 67 | 264 | 205 |
| Viscosity at 1.5/s [Pa·s] | 63 | 55 | 200 | 191 |

As can be seen from Table 7, the viscosity of Example 2 is significantly lower than for Comparative Example 2 (without the carbamate), for Part A and for Part B, respectively. Example 2 shows easy to use ability, which means that it has no tendency for clumping, that the composition is castable, i.e., pourable, after mixing or shearing, and that it is a very low viscosity material. Without wishing to be bound by theory, the very low viscosity after shearing might be due to the breakage of hydrogen bonds. Comparative Example 2 is not castable, i.e., not pourable, after mixing or shearing, due to the high viscosity and its pasty consistency.

Despite the low viscosity of Example 2, no sedimentation was observed after two months at room temperature.

## Claims

1. A curable precursor of a composition, the curable precursor comprising
(a) a radically (co)polymerizable (meth)acrylate-based component;
(b) a curing agent;
(c) an inorganic filler having a mean particle size (d₅₀) of at least 1 µm; and
(d) a thixotropic agent which is a carbamate.

2. The curable precursor of claim 1, wherein the composition is an adhesive composition.

3. The curable precursor of claim 1, wherein the composition is a non-adhesive composition.

4. The curable precursor of any of claims 1 to 3, wherein the radically (co)polymerizable (meth)acrylate-based component comprises
(i) (meth)acrylic acid ester monomers.

5. The curable precursor of any of claims 1 to 4, wherein the radically (co)polymerizable (meth)acrylate-based component comprises
(ii) an ethylenically unsaturated acidic compound.

6. The curable precursor of any of claims 1 to 5, wherein the curing agent is an organic peroxide.

7. The curable precursor of any of claims 1 to 6, wherein the inorganic filler is selected from the group consisting of ceramics, glass, metals, graphite, and combinations thereof.

8. The curable precursor of any of claims 1 to 7, wherein the curable precursor comprises at least 10 percent by weight of the inorganic filler, based on the total weight of the curable precursor.

9. The curable precursor of any of claims 1 to 8, wherein the carbamate is selected from the group consisting of a polyurea, a polyurethane, a polyamide, and mixtures thereof.

10. The curable precursor of any of claims 1 to 9, wherein the carbamate is a polymeric urea-urethane.

11. The curable precursor of claim 10, wherein the polymeric urea-urethane is prepared by a first reaction of a diisocyanate with a polyol; wherein excess diisocyanate is used to form an isocyanate mixture comprising a NCO-terminated urethane prepolymer and excess diisocyanate; and followed by a second reaction of the isocyanate mixture with an amine mixture, wherein the amine mixture comprises at least one primary monoamine and at least one primary diamine.

12. The curable precursor of claim 11, wherein the amount of the at least one primary diamine is from 0.1 to 45 equivalents, based on 100 equivalents of the amine mixture.

13. The curable precursor of claim 11 or 12, wherein after the second reaction the polymeric urea-urethane is substantially free of isocyanate and of the at least one primary monoamine and of the at least one primary diamine.

14. The curable precursor of any of claims 1 to 13, further comprising a polyether oligomer having a number average molecular weight of at least 2000 g/mol and which comprises at least one radically (co)polymerizable reactive group.

15. Use of the curable precursor according to claims 1 to 14
for thermal management applications in the automotive and electronic industry;
as an electrically insulating composition in the electronic industry and for cable insulation; and
as a color pigment comprising composition in the coating and paint industry.
